# EUROPEAN PATENT SPECIFICATION

(11) **EP 2 269 871 B1**
(45) Date of publication and mention of the grant of the patent: **10.08.2011**
(21) Application number: 10380088.4
(22) Date of filing: 30.06.2010
(51) Int. Cl.: B60R 9/04, B60R 9/058, F16B 5/02, F16B 37/04

(54) **Support clamp for mounting vehicle racks**
Halteklammer zur Montage von Fahrzeuggestellen
Pince support pour le montage de grilles de véhicule

(30) Priority: 01.07.2009 ES 200930232 U
(43) Date of publication of application: 05.01.2011
(73) Proprietor: Seat, S.A., 08760 Martorell (ES)
(72) Inventor: Carrascosa Rodriguez, Alberto, 08760 Martorell Barcelona (ES)
(74) Representative: Carvajal y Urquijo, Isabel

(56) References cited:
- DE-A1- 19 542 109

## Description

### Field of the invention

The present invention refers to a support clamp for mounting vehicle racks and more specifically for mounting racks which include an allowance compensator, as a means to safely fasten the rack to the reinforcement beam(s) of the flanks of a vehicle roof, through holes in said beams.

The clamp of the invention is designed as a means to guarantee the centering of the allowance compensator on each one of the holes of the reinforcement beams.

### Background of the invention

The mounting of racks on vehicle roofs requires reinforcing the flanks thereof, to securely support the weight of the objects arranged on the rack. These reinforcements usually consist of one or two beams which run along each flank of the roof, under the sheet thereof, and which will serve as support for the rack.

For the mounting of racks on vehicle roofs featuring at least one reinforcement beam on each flank, there are known anchors which comprise a fixing screw and an allowance compensator. The fixing screw is inserted through opposing holes of longitudinal bars of the rack, of the roof sheet and of the reinforcement beam and rests outwardly and is tightened against the bar of the rack and the reinforcement beam. The allowance compensator is arranged between the roof sheet and the reinforcement beam thereof, resting and tightening against these components.

The purpose of the allowance compensator is to maintain a constant relief in the rack support on the roof sheet and absorb dimensional allowances generated by the mounting between the roof sheet and the reinforcement beam thereof, and to enable a controlled transmission of the tightening torque between the different components: rack, roof sheet and reinforcement beam. An anchor with this constitution is described in the utility model 200800910 of the same applicants. Another example of an allowance compensator is described in DE 19542109 A1.

The problem of the anchor with the constitution described is that its mounting on the vehicle roof has to be carried out in the vehicle assembly line. To that end, the operator with the appropriate tool, once the reinforcement beam has been mounted, assembles the compensator from the vehicle interior, with the space problems that this entails and fundamentally with risks of lack of precision in the mounting.

In order to solve the aforementioned problems, there is known an anchor for vehicle roof racks, from the utility model 1068896 of the same applicants, in which the allowance compensator comprises an upper bushing and a lower nut, and also a cage retainer of the nut on the reinforcement beam, coinciding with each one of the holes of said beam. Through this cage the nut of the allowance compensator is fixed to the reinforcement beam, for example by welding, before the mounting of said beam on the vehicle roof. Thus, the mounting operations of the allowance compensator inside the vehicle are avoided.

However, the fixing of the cage must be performed so that it offers a correct centering of the allowance compensator, with respect to the holes of the reinforcement beam. On the other hand, according to the constitution described in the utility model 1068896, the allowance compensator is in contact with the reinforcement beam, so that when said beam is submerged with the allowance compensator in the paint bath, both components are joined and when they are detached later there can be an area or spot without paint, where there will be a corrosion effect. Besides, the heat caused by the welding of the cage to the reinforcement beam can produce deformations on said bar, creating an allowance problem and a bad adjustment in the mounting of the different components.

### Description of the invention

The object of the present invention is a support clamp for the mounting of racks on vehicle roofs, constituted so that it enables to help in the centering of the allowance compensator, with respect to the holes of the reinforcement beam, and at the same time it avoids contact between said beam and the allowance compensator, to prevent both elements from being joined through the paint bath they receive, thus avoiding the later corrosion of the vehicle, when these two components are detached.

According to the present invention, the support clamp is constituted by a plastic material plate featuring, from one of its edges, a notch with the appropriate dimensions to enable the allowance compensator to pass through it, while from the opposite edge, said plate extends into a pull-tab, which will serve as a lever or action means to facilitate the mounting and dismounting of the clamp in the reinforcement beam, in a position transversal to it.

The plate constituting the clamp of the invention comprises means for its positioning and anchorage to the reinforcement beams, in transversal position and under them, with the notch coinciding with the contour of one of the reinforcement beam holes. The plate also has means to fasten and center the allowance compensator with respect to the reinforcement beam hole, so that it is separated from said beam.

As regards the pull-tab, it forms an angle higher than 180° with the upper surface of the plate, to act as an action lever in the clamp mounting and dismounting phase on the beam. This tab has transversal ribs on its outer surface which will facilitate its gripping and handling during the clamp mounting and dismounting phases.

The notch of the plate forming the clamp has a circular contour, its diameter being slightly larger than the outer contour of the allowance compensator, and leading through a passage thinner than the diameter of said circular contour. From the circular contour of the notch there protrude radial teeth having certain downward inclination and delimiting a smaller circular contour than the external one of the allowance compensator, determining the centering means and the fastening means of said compensator.

The plate forming the clamp is also provided, from its free longitudinal edges and in a position adjacent to the pull-tab, with aligned lateral notches.

The positioning and anchoring means of the plate to the reinforcement beam consist of two bended pins, which perpendicularly protrude from the plate between the lateral notches and the root or beginning of the aforementioned pull-tabs, and in a series of straight pins perpendicularly protruding also from the plate, on the same side as the bended pins, in a position adjacent to the circular edge of the plate notch. The straight pins delimit an outer contour which has an approximately equal diameter to that of the reinforcement beam holes. The bended pins have a section parallel to the plate, which is guided towards a direction opposite to the pull-tab. These bended pins can be Z-shaped, with end sections perpendicular to the plate and with the intermediate section parallel thereto, and approximately the same height as the thickness of the reinforcement beam. In turn, the straight pins will have a larger height than the thickness of the reinforcement beam and will end in an outer flange or flaring protruding on said bar.

From the plate upper surface, there also protrude, around the circular contour of the notch, a series of pivots serving as separating elements, for supporting the reinforcement beam.

The plate also has, from the bottom of the notch, two through cutting lines, directed towards the pull-tab, which facilitate the bending of the plate with respect to the straight pins.

Finally, from the reinforcement beam there protrude, in a longitudinal direction and at both sides of the rack anchoring holes, wings serving as stops for the cage and nut of the allowance compensator.

### Brief description of the drawings

The attached drawings show a non-limiting example of an embodiment of the support clamp for the mounting of vehicle racks object of the invention.

In the drawings:
Figure 1 is a perspective view of a support clamp, for the mounting of vehicle racks, constituted according to the invention.
Figure 2 is a perspective exploded view of a reinforcement beam, cage and nuts of the allowance compensator and support clamp for the mounting thereof.
Figure 3 is a partial perspective view of the mounting of a support clamp on a reinforcement beam, coinciding with one of the holes of said beam.
Figures 4a, 4b, 4c and 4d represent the mounting sequence of the support clamp of the invention in a reinforcement beam, according to sections taken according to the line IV-IV of figure 3.
Figure 5 shows a similar view to that of figure 3, with the allowance compensator already mounted.
Figures 6a, 6b and 6c show the mounting sequence of the allowance compensator, in sections taken according to the cutting line VI-VI of figure 5.
Figure 7 is a partial longitudinal sectional view of the reinforcement beam with an allowance compensator, taken according to the cutting line VII-VII of figure 5.
Figures 8a, 8b, 8c, 8d and 8e show the dismounting sequence of the support clamp and later fixing of the rack, through one of its beams.

### Detailed description of an embodiment

The constitution, characteristics and advantages of the support clamp of the invention are described below with reference to the example of an embodiment shown in the aforementioned drawings.

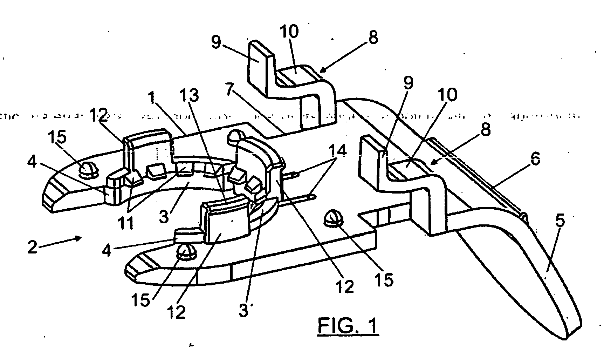

Figure 1 shows a perspective view of a support clamp, for the mounting of vehicle racks, comprising a plastic material plate 1, with approximately rectangular contour, featuring from one of its edges a notch 2, which includes a circular contour 3, the diameter of which is slightly larger than the external one of the allowance compensator, and a slightly throttled outlet 4, with a slightly smaller diameter than the external one of the allowance compensator. From the opposite edge of the plate 1 there protrudes a pull-tab 5 which forms with the outer surface of the plate an angle higher than 180° and which has transversal ribs 6 on its outer surface to facilitate the operation on said tab.

From its longitudinal edges, the plate 1 has opposite notches 7, and between said notches and the tab 5 there protrude, above the plate, two bended pins 8, preferably Z-shaped pins, with end sections 9 which are perpendicular to the plate 1 and an intermediate section 10 which is parallel to said plate and is separated from it by a distance which is approximately equal to the reinforcement beam thickness.

From the circular contour 3 of the notch 2 there radially protrude teeth 11, having a slight downward inclination, which delimit a smaller circular contour than the external one of the allowance compensator, and which will serve as centering and fastening means of said compensator.

In a position adjacent to the circular contour 3 there upwardly protrude from the plate 1 straight pins 12 which have a greater height than the reinforcement beam thickness, in which the clamp is to be mounted. Said pins end in its upper part in an outer flange or flaring 13 which will be located over the reinforcement beam.

From the circular contour 3 of the notch 2 there stem longitudinally, towards the pull-tab 5, two through cutting lines 14 which will grant flexibility to the plate 1.

Finally, from the upper surface of the plate there protrude separating pivots 15, around the notch 2, against which the reinforcement beam will rest.

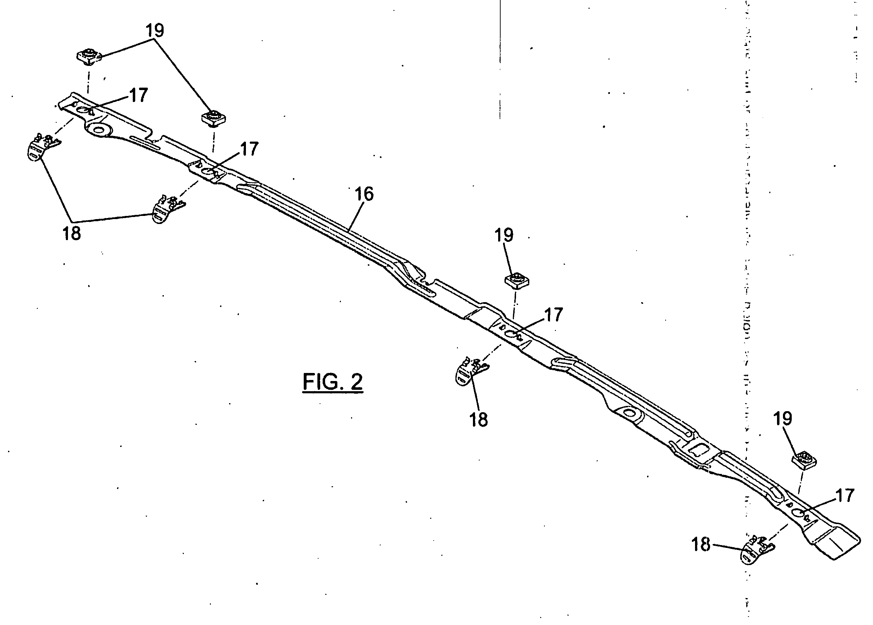

Figure 2 shows a reinforcement beam, including a series of holes 17, and coinciding with each one of them there will be mounted a support clamp, which is indicated by reference number 18, and an allowance compensator 19.

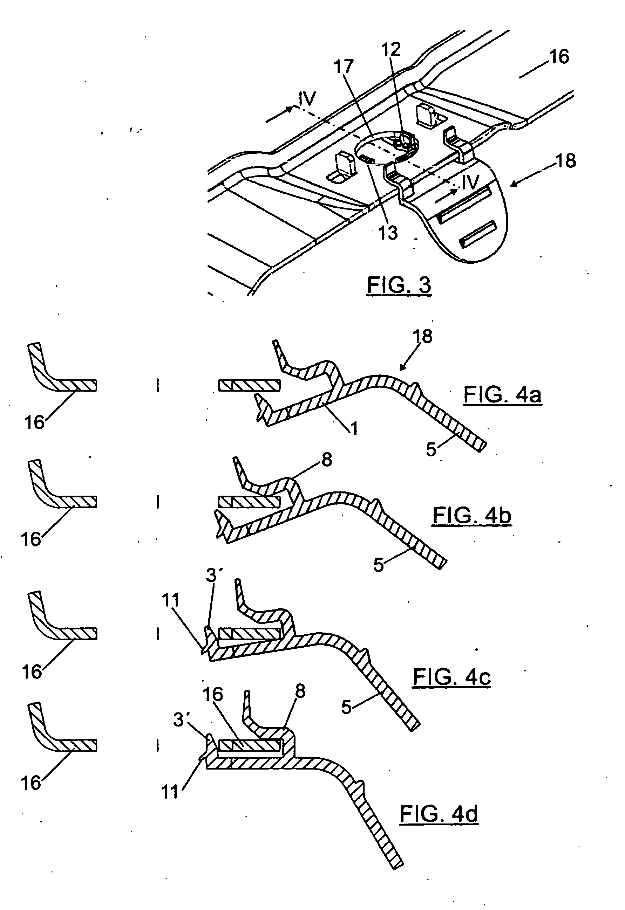

As it can be seen in figure 3, the support clamp 18 is mounted in a transversal position on the reinforcement beam 16, so that the bended pins 8 of the support clamp encircle the beam through one of its longitudinal edges, partially protruding through the corresponding hole 17 of the straight pins 12, resting the rear flange 13 against said beam. The circular contour 3 of the notch 2 is located in a position coinciding with the reinforcement beam hole 17 contour.

The mounting of the support clamp 18 on the beam 16 is carried out as shown in figures 4a to 4d, progressively inserting the plate 1 under the beam 16, with deformation of the bended pins 18, until the corresponding section of the beam 16 is braced between the bended pins 8, the straight pins 12 and the flange 3' around the edge 3, between the straight pins 12, and from which there protrude teeth 11, as shown in figure 4d. The necessary deformation of the plate 1 and pins 8 is attained by means of action on the pull-tab 5.

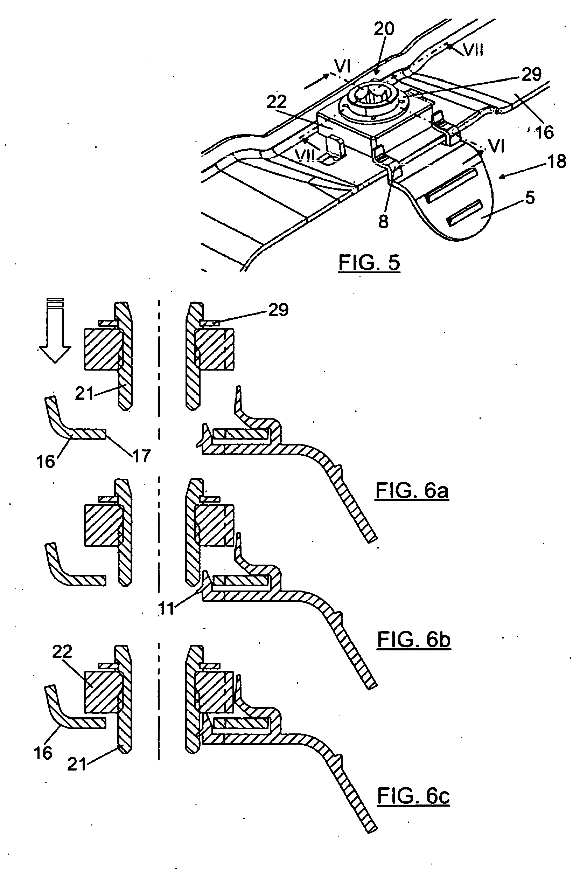

Once the support clamp is coupled on the beam 16, with the circular contour 3 of the notch 2 coinciding with the holes 17 of the beam, the allowance compensator 20 is mounted as shown in figure 5, following the sequences represented in figures 6a to 6c, facing the threaded bushing 21 of the allowance compensator to the hole 17 of the reinforcement beam 6 and downwardly displacing thereafter said bushing until it goes through the circular contour 3 of the notch 2, tightened between the teeth 11, which retain it, preventing its accidental exit. In this position, the nut 22 of the allowance compensator will rest against the flanges 15, figure 1, of the plate 1, preventing it from resting directly on its surface.

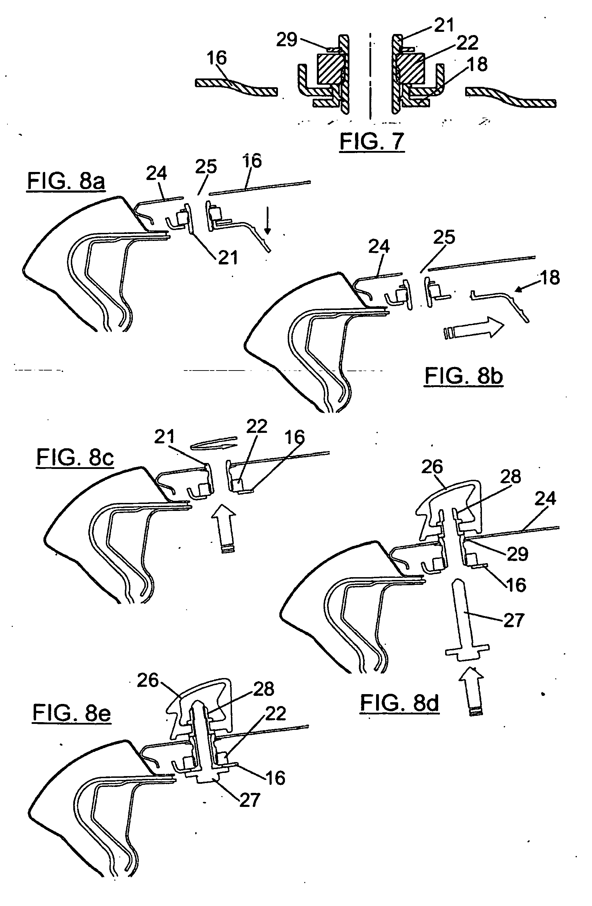

Figure 7 shows how the teeth 11 retain the bushing 21 of the allowance compensator, with the nut 22 separated from the surface of the reinforcement beam 16.

Finally, the reinforcement beam 16 is mounted, along the vehicle roof flanks, under the roof sheet 24, coinciding with the hole 25 thereof. Next, the support clamp 18 is dismounted, following an inverse sequence to the one described with reference to figures 4a to 4d, then lifting the bushing 21 of the allowance compensator, through the rotation thereof with respect to the nut 22, as indicated by arrows in figure 8c. Next, the rack is placed, in such a way that the beam holes 26 thereof face the bushing 21 of the allowance compensator, to insert after that, from the vehicle interior, the nut 27 which is screwed to the integral nut 28 of the rack beams 26, being the nut 22 pressed downwards against the reinforcement beam 16 and upwards, through the plastic material washer 29, against the vehicle roof 24, all of which is represented in figure 8c.

With the support clamp of the invention, it is guaranteed the correct positioning and retention of the allowance compensator, through its bushing 26, as shown in figures 6a to 6c and 7, while maintaining at the same time the nut 22 of the allowance compensator separated from the reinforcement beam 16 surface, allowing the painting to penetrate between the components, during the reinforcement beam painting phase.

In the support clamp of the invention, the teeth 11 constitute the positioning and fastening means of the allowance compensator, while the bended pins 8 and the straight pins 12 are positioning and anchoring means of the clamp to the reinforcement beams. The pivots 15 serve as separation elements between the allowance compensator nut and the reinforcement beam.

As it can be seen in figures 3 and 5, the reinforcement beam 16 has, in longitudinal alignment and at both sides of each hole 17 of the reinforcement beam 16; two wings 30 that prevent the rotation of the nut 22 of the allowance compensator.

## Claims

1. Support clamp for the mounting of vehicle racks, intended to guarantee the centering of an allowance compensator on each one of the holes of the reinforcement beams of the vehicle roof flanks, in which the rack is anchored, **characterized in that** it comprises a plastic material plate featuring, from one of its edges, a notch with the appropriate dimensions to enable the allowance compensator to pass through it, while from the opposite edge, said plate extends into a pull-tab; said plate which has positioning and anchoring means to the reinforcement beams, in transversal position and under them, with the notch coinciding with the contour of one of the reinforcement beam holes, and means to fasten and center the allowance compensator with respect to the reinforcement beam hole and separated from it.

2. Support clamp according to claim 1, **characterized in that** the aforementioned notch has a circular contour bottom, its diameter being slightly larger than the outer contour of the allowance compensator, and a notch having a width thinner than the diameter of said circular contour, radially protruding from the bottom of the notch teeth having certain downward inclination, which delimit a circular contour smaller than the external one of the allowance compensator, to configure the positioning and fastening means of said compensator.

3. Support clamp according to claim 1, **characterized in that** the aforementioned plate has an approximately rectangular contour, leading the aforementioned notch through one of the small edges of said plate, while from the opposite small edge there protrudes a pull-tab, having the plate, from its longitudinal edges and in a position adjacent to the pull-tab, transversally aligned lateral notches.

4. Support clamp according to claim 1, **characterized in that** the positioning and anchoring means of the plate to the reinforcement beam consist of two bended pins perpendicularly protruding from the plate, between the lateral notches and the root or beginning of the pull-tab, and in a series of straight pins perpendicularly protruding from the plate, on the same side as the bended pins, in a position adjacent to the circular edge of the aforementioned notch, and which delimit an outer contour which has an approximately equal diameter to that of the reinforcement beam holes; whose bended pins have a section parallel to the plate, which is directed towards a direction opposite to the putt-tab.

5. Support clamp according to claim 4, **characterized in that** the bended pins are Z-shaped, with end sections perpendicular to the plate, an intermediate section parallel to said plate and of approximately the same height as the thickness of the reinforcement beam.

6. Support clamp according to claim 4, **characterized in that** the straight pins have a greater height than the thickness of the reinforcement beam and said straight pins end in an outer flange or flaring protruding over said reinforcement beam.

7. Support clamp according to claim 1, **characterized in that** from the upper surface of the plate a series of separating pivots protrude, around the notch, for the support of the reinforcement beam.

8. Support clamp according to claim 1, **characterized in that** the plate is provided, from the bottom of the notch, with two through cutting lines, directed to the pull-tab.

9. Support clamp according to claim 1 or 3, **characterized in that** the pull-tab forms an angle higher than 180° with the upper surface of the plate.

## Patentansprüche

1. Stützklammer zum Anbringen von Fahrzeuggepäckträgem, die zum Gewährleisten des Zentrierens eines Toleranzausgleichers an jedem der Löcher der Verstärkungsträger der Fahrzeugdachflanken bestimmt ist, in denen der Gepäckträger verankert ist, **dadurch gekennzeichnet, dass** sie eine Platte aus Kunststoffmaterial umfasst, die von einer ihrer Kanten aus eine Kerbe mit den geeigneten Abmessungen zum Ermöglichen, dass der Toleranzausgleicher dort hindurchläuft, aufweist, während die Platte von der gegenüberliegenden Kante aus in eine Zuglasche verläuft; wobei die Platte Positionier- und Verankerungsmittel zu den Verstärkungsträgem, in quer verlaufender Position und unter ihnen, wobei die Kerbe dem Profil von einem der Vertärkungsträgerlöcher entspricht, und Mittel zum Befestigen und Zentrieren des Toleranzausgleichers bezüglich des Verstärkungsträgerlochs und davon beabstandet aufweist.

2. Stützklammer nach Anspruch 1, **dadurch gekennzeichnet, dass** die obengenannte Kerbe einen kreisförmigen Profilboden, dessen Durchmesser geringfügig größer als das äußere Profil des Toleranzausgleichers ist, und eine Kerbe mit einer Breite aufweist, die kleiner als der Durchmesser des kreisförmigen Profils ist, wobei radial vom Boden der Kerbe Zähne mit einer bestimmten Neigung nach unten vorstehen, die ein kreisförmiges Profil, das kleiner als das äußere Profil des Toleranzausgleichers ist, zum Konfigurieren der Positionier- und Befestigungsmittel des Ausgleichers begrenzen.

3. Stützklammer nach Anspruch 1, **dadurch gekennzeichnet dass** die obengenannte Platte ein ungefähr rechteckiges Profil aufweist, wobei die obengenannte Kerbe durch eine der kleinen Kanten der Platte führt, während von der gegenüberliegenden kleinen Kante eine Zuglasche vorsteht, wobei die Platte von ihren Längskanten und in einer Position, die der Zuglasche benachbart ist, quer verlaufend ausgerichtete, seitliche Kerben aufweist.

4. Stützklammer nach Anspruch 1, **dadurch gekennzeichnet, dass** die Positionier- und Verankerungsmittel der Platte zu dem Verstärkungsträger aus zwei gebogenen Stiften, die senkrecht von der Platte vorstehen, zwischen den seitlichen Kerben und dem Fuß oder Anfang der Zuglasche und einer Reihe gerader Stifte bestehen, die senkrecht von der Platte vorstehen, auf derselben Seite wie die gebogenen Stifte, in einer Position, die der kreisförmigen Kante der obengenannten Kerbe benachbart ist, und ein Außenprofil begrenzen, das einen ungefähr gleichen Durchmesser wie der der Verstärkungsträgerlöcher aufweist; wobei die gebogenen Stifte einen Teilabschnitt parallel zu der Platte aufweisen, der in entgegengesetzter Richtung zur Zuglasche hin gerichtet ist.

5. Stützklammer nach Anspruch 4, **dadurch gekennzeichnet, dass** die gebogenen Stifte Z-förmig sind, mit Endteilabschnitten, die senkrecht zu der Platte stehen, einem Zwischenteilstück parallel zu der Platte und ungefähr derselben Höhe wie die Stärke des Verstärkungsträgers.

6. Stützklammer nach Anspruch 4, **dadurch gekennzeichnet, dass** die geraden Stifte eine größere Höhe als die Stärke des Verstärkungsträgers aufweisen und die geraden Stifte in einem Außenflansch oder sich aufweitend enden und über den Verstärkungsträger vorstehen.

7. Stützklammer nach Anspruch 1, **dadurch gekennzeichnet, dass** von der oberen Fläche der Platte eine Reihe von Trenndrehpunkten um die Kerbe zum Stützen des Verstärkungsträgers vorstehen.

8. Stützklammer nach Anspruch 1, **dadurch gekennzeichnet, dass** die Platte vom Boden der Kerbe aus mit zwei durchschneidenden Linien versehen ist, die zur Zuglasche gerichtet sind.

9. Stützklammer nach einem der Ansprüche 1 oder 3, **dadurch gekennzeichnet, dass** die Zuglasche einen Winkel über 180° mit der oberen Fläche der Platte ausbildet.

## Revendications

1. Ferrure-support pour le montage de supports de véhicules, conçue pour garantir le centrage d'un correcteur de jeu dans chacun des orifices des barres de renforcement des flancs du toit du véhicule où le support est fixé, **caractérisée en ce qu'**elle comprend : une plaque en matière plastique présentant, à partir de l'un de ses bords, une entaille aux dimensions adéquates pour permettre au compensateur de jeu de passer à travers, tandis que depuis le bord opposé, cette plaque s'étend pour former une languette de traction ; cette plaque étant pourvue de moyens de positionnement et de fixation aux barres de renforcement, en position transversale et au-dessous de ces dernières; avec l'entaille coïncidant avec le contour de l'un des orifices des barres de renforcement, et de moyens pour fixer et centrer le compensateur de jeu, par rapport à l'orifice de la barre de renforcement, tout en les tenant séparés.

2. Ferrure-support selon la revendication 1, **caractérisée en ce que** cette entaille présente une partie inférieure au contour circulaire, son diamètre étant légèrement supérieur à celui du contour extérieur du compensateur de jeu, et une entaille dont la largeur est inférieure au diamètre de ce contour circulaire, qui ressort, dans le sens radial, de la partie inférieure des dents de l'entaille, qui présente une inclinaison vers le bas, définissant un contour circulaire inférieur au contour externe du compensateur de jeu, pour configurer le positionnement et les moyens de fixation de ce compensateur.

3. Ferrure-support selon la revendication 1, **caractérisée en ce que** la plaque susmentionnée présente un contour approximativement rectangulaire, amenant l'entaille susmentionnée à travers l'un des petits bords de cette plaque, tandis qu'une languette de traction ressort du petit bord opposé, la plaque étant dotée, depuis ses bords longitudinaux et dans une position adjacente à la languette de traction, d'entailles latérales alignées transversalement.

4. Ferrure-support, selon la revendication 1, **caractérisée en ce que** les moyens de positionnement et de fixation de la plaque à la barre de renforcement consistent en deux broches incurvées, qui ressortent perpendiculairement de la plaque, entre les entailles latérales et la naissance ou le commencement de la languette de traction, et en une série de broches droites qui ressortent perpendiculairement de la plaque, du même côté que les broches incurvées, dans une position adjacente au bord circulaire de l'entaille susmentionnée, et qui définissent un contour extérieur, présentant un diamètre approximativement égal à celui des orifices de la barre de renforcement ; dont les broches incurvées présentent une section parallèle à la plaque, qui est orientée vers une direction opposée à la languette de traction.

5. Ferrure-support selon la revendication 4, **caractérisée en ce que** les broches incurvées présentent une forme en Z, avec les sections extrêmes perpendiculaires à la plaque, une section intermédiaire parallèle à cette plaque et ayant environ la même hauteur que la grosseur de la barre de renforcement.

6. Ferrure-support selon la revendication 4, **caractérisée en ce que** les broches droites présentent une hauteur plus grande que la grosseur de la barre de renforcement et ces broches droites finissent en une collerette ou partie évasée externe, qui ressort sur cette barre de renforcement.

7. Ferrure-support selon la revendication 1, **caractérisée en ce que** de la surface supérieure de la plaque ressortent une série de pivots séparateurs, autour de l'entaille, pour le support de la barre de renforcement.

8. Ferrure-support selon la revendication 1, **caractérisée en ce que** la plaque est pourvue, depuis la partie inférieure de l'entaille, de deux lignes de coupe passantes, orientées vers la languette de traction.

9. Ferrure-support selon la revendication 1 ou 3, **caractérisée en ce que** la languette de traction forme un angle avec la surface supérieure de la plaque de plus de 180°.
